Europäisches Patentamt

European Patent Office

Office européen des brevets

(11) Publication number: **0 148 266 B1**

# EUROPEAN PATENT SPECIFICATION
## published in accordance with Art. 158(3) EPC

(45) Date of publication of patent specification: 27.03.91  (51) Int. Cl.⁵: **H04J 14/02, H04J 1/10**

(21) Application number: 84903500.1

(22) Date of filing: 25.06.84

(86) International application number:
**PCT/US84/00952**

(87) International publication number:
**WO 85/00484 (31.01.85 85/03)**

(54) WAVELENGTH DIVISION MULTIPLEXING OPTICAL COMMUNICATIONS SYSTEMS.

(30) Priority: 08.07.83 US 511873

(43) Date of publication of application:
17.07.85 Bulletin 85/29

(45) Publication of the grant of the patent:
27.03.91 Bulletin 91/13

(84) Designated Contracting States:
BE DE FR GB NL

(56) References cited:
EP-A- 0 037 793
WO-A-83/02168
CA-A- 1 108 902
US-A- 3 731 110
US-A- 4 002 997

PROCEEDINGS OF THE INSTITUTE OF ELEC-
TRICAL AND ELECTRONIC ENGINEERS, vol.
58, no. 10, October 1970, pages 1683-1690,
New York, US; O.E. DELANGE: "Wide-band

optical communication systems: part II -
Frequency-division multiplexing"

OPTICS LETTERS, Volume 7, Number 6, June
1982, Stokes Et Al, All-Single-Mode Fiber
Resonator

(73) Proprietor: AMERICAN TELEPHONE AND
TELEGRAPH COMPANY
550 Madison Avenue
New York, NY 10022(US)

(72) Inventor: WILLIAMS, Gareth, Ferd
12 South Atlantic Avenue, Apartment 99
Aberdeen, NJ 07747(US)

(74) Representative: Watts, Christopher Malcolm
Kelway et al
AT&T (UK) LTD. AT&T Intellectual Property
Division 5 Mornington Road
Woodford Green Essex IG8 OTU(GB)

## Description

This invention relates to an optical device comprising, a waveguide resonator a photodetector and the resonator is adapted to be evanescently coupled to an optical waveguide (F) and optically coupled to the photodetector.

Background of the Invention

In recent years, there has been an increased demand for high capacity communications systems and although several alternative approaches to such systems have been explored, optical communications systems now appear to be the preferred approach to meeting such demand. Optical communications systems as presently contemplated have a light source and a photodetector which are optically coupled to each other by a glass transmission line. The glass transmission line presently has a silica based composition and is commonly referred to as an optical fiber. A light source commonly used in such optical communications systems is a semiconductor laser diode. Such optical communications systems have been developed to a high degree of sophistication and are now capable of rapidly transmitting large amounts of information over long distances. In most present day systems, only one such diode is used to transmit information on any individual fiber, and the diode should ideally operate with essentially a stable single frequency spectral output. Information is transmitted as the laser emits or does not emit light pulses thus forming a bit stream, and the photodetector receives or does not receive light pulses within predetermined time intervals.

The three primary contemplated markets for lightwave systems are transmission, loop plant (subscriber and closed) and local area network systems. Transmission systems usually called trunks carry calls between central offices. Loop plant connects the central office to the customer station or equipment. Local area networks carry calls between locations that are located on customer premises, e.g., between a computer and work station, and are useful for factory or office automation.

However, still greater amounts of information can be transmitted if, for example, a plurality of light sources emitting radiation at different frequencies is optically coupled into a single optical fiber at the same transmitter location. Thus, there would be a plurality of bit streams at different frequencies. Such systems have been contemplated and are commonly called wavelength division multiplexing systems. In such systems, the photodetector component includes means to individually detect the separated frequencies or wavelengths, i.e., the photodetector has demultiplexing means.

Superficially, such a system appears analogous to a radio or microwave system using a plurality of transmitters, at one location, emitting at different frequencies and a plurality of receivers at another location. One might think that radio techniques could be directly applied to optical systems without significant change. However, this is not possible. Radio circuits are typically much smaller than the radio wavelengths and microwave circuits have dimensions comparable to microwave wavelengths. Optical multiplexers smaller than an optical wavelength are not likely given the resolution of present lithography used in device fabrication and would also be difficult to couple optical energy into and out of. Optical wavelength division multiplexing devices are thus larger than optical wavelengths and fundamentally different from radio and microwave systems.

It should also be appreciated that attempts to implement narrow band optical systems face fundamental stability and resolution problems not encountered in radio. Optical frequencies are approximately 5 orders of magnitude greater than microwave frequencies, and both frequency stability and resolution must be $10^5$ times greater in narrow band optical systems than in microwave systems. Such stability has not been possible.

The subject of wavelength division multiplexing in optical communications systems is reviewed in an article by W. J. Tomlinson in Applied Optics , 16 , pp. 2180-2194, August, 1977. The systems described are typical and all have a multi-transmitter module at one end and a multi-receiver module at the other end. The systems are presently contemplated only for trunks. They are not easily adaptable for either loop plant operation or a local area network because the optical fiber cannot be easily tapped at arbitrary places without first detecting all the signals and then regenerating them. Individual components discussed by Tomlinson are, however, illustrative. Multiplexing and demultiplexing means typically comprise either gratings, prisms, or filters. While these means are perfectly adequate for many multiplexing systems, they suffer the drawback that the number of channels that the system may handle is extremely limited because the wavelength dispersion of the demultiplexing means is not adequate to separate very closely spaced channels in devices of reasonable dimensions. A relatively large channel spacing is required because the optical bandwidth must be adequate to absorb the wavelength variability due to, for example, temperature, aging, and manufacturing, of present semiconductor lasers. Also, some of the multiplexing means have a relatively high fixed loss per channel. This also limits the possible number of channels.

Other wavelength multiplexers have been described in the literature. For example, frequency selective coupling means, i.e., evanescent couplers, have been proposed as an alternative to means that rely on dispersive properties of the multiplexer components. An evanescent coupler, in its simplest embodiment, uses at least two optical waveguides in such close proximity that the propagating mode of the second waveguide is within the exponentially decaying evanescent portion of the propagating mode of the first waveguide. This is called overlap. The overlap couples optical energy from the first waveguide into the second waveguide if the propagation constants, k , in the two guides are equal. If the values of k are equal at only a single frequency, then only energy at that frequency is coupled while energy at other frequencies remains in the first guide. H. F. Taylor describes such a frequency selective coupling scheme in Optics Communications , 8 , pp. 421-425, August 1973. The couplers described used optical coupling between two nonidentical waveguides to couple the single optical frequency for which the propagation constants in the two guides are equal. Optical bandwidths of approximately several tens of Angstroms could be achieved in 1 cm long couplers thus theoretically permitting about 100 optical channels. However, these bandwidths are too narrow for use with present semiconductor lasers. There is also the problem of ensuring that the multiplexer coupling frequency is accurately matched to the demultiplexer coupling frequency. However, with anticipated variations in, for example, manufacture, the narrow transmission bandwidth might not overlap the narrow reception bandwidth.

An interesting variant of this selective coupling scheme is described in Applied Optics , 17 , pp. 3253-3258, October 15, 1978. The system described used optical coupling between nonidentical planar waveguides to demultiplex the optical signals. While advantageously used for some applications, the coupler demultiplexers all lack a resonator component. This is disadvantageous because they need a light source having an extremely narrow spectral output.

In Fiber and Integrated Optics , 1 , pp. 227-241, 1978, H. Kogelnik reviewed the subject of integrated optics. Multiplexing transmitter modules using distributed feedback semiconductor lasers are described. In one module, six distributed feedback lasers are fabricated on a single substrate and their outputs are combined by a branching waveguide coupler. The manufacturing, temperature and drift variations of the lasers are identical, due to the single substrate and a channel spacing of 20 Angstroms is possible. However, the problem still exists of making a receiver which will match the transmitter frequencies as they drift.

Other optical components suitable for use in an optical communications system, as well as other uses, have been described in the literature. For example, Applied Physics Letters , 33 , pp. 940-941, December 1, 1978, described a fiber gyroscope that has a fiber ring, not a Fabry-Perot, interferometer for electronic phase sensing.

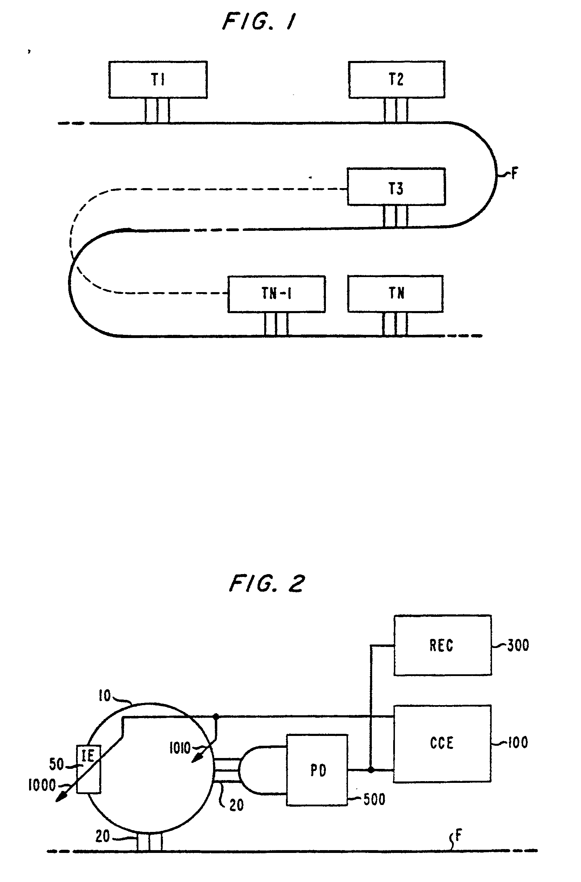

In the Bell System Technical Journal , pp. 2103-2132, September, 1969, E. A J. Marcatili describes light transmission through curved optical waveguides. Of special interest from the point of view of optical communications systems is the ring Fabry-Perot interferometer depicted in his FIG. 1. However, the embodiment depicted is not well adapted for wavelength division multiplexing systems as the resonator shown picks out radiation at many frequencies without a significant amount of discrimination between the various frequencies. That is, the resonator is unable to discriminate between the multiplicity of Fabry-Perot peaks of the resonator. Also, as the resonator disclosed is an integrated device, that is, the waveguides and resonant ring are fabricated on a single substrate, it is not well adapted for use with optical fiber communications systems. Another device of general interest is the integrated linear Fabry-Perot resonator described by Smith et al in Applied Physics Letters , 34 , pp. 62-65, January 1, 1979. The device described required no external electrical inputs and used only optical outputs. The use contemplated was in bistable optical devices.

Thus, the problems are that the typical prior art wavelength division multiplexing systems use a very wide optical bandwidth to accommodate the frequency variations of semiconductor lasers and the total number of channels is very limited. Some narrower bandwidth system components were demonstrated, for example, frequency selective evanescent couplers, but have not been used in systems because of the absence of a precise narrow bandwidth source and the difficulty in matching transmitter and receiver bandwidths center frequencies. Additionally, the systems are not easily adapted for loop plant or local area network operation.

A device as set out in the preamble of claim 1 is disclosed in Wo-A-83/02168.

According to the invention there is provided an optical device as set out in claim 1.

## Summary of the Invention

It has been found that a wavelength division multiplexing system may be fabricated which can handle a large number of optical channels, for example, $10^4$. The optical communications system comprises an optical fiber and a device comprising a photodetector; a waveguide resonator that is evanescently coupled to an optical fiber and optically coupled to said photodetector; an intracavity element optically coupled to the waveguide resonator; and a control circuit element which tunes either the intracavity element or the waveguide resonator to specific frequencies. In one embodiment, the system comprises a plurality of devices which may be optically coupled to the system's fibers at any place. The devices are independently tunable thereby permitting a signal having a desired frequency to be either received or transmitted. Additionally, the devices perform frequency selective coupling from the fiber to the transceiver and thereby couple to the desired optical channel frequency, yet have negligible attenuation of the undesired channels remaining in the fiber. This permits a signal having a desired wavelength to be received with negligible attenuation of unwanted signals at other wavelengths. An optical gain element in the resonator or coupled to the resonator yields a device which can transmit thereby permitting transmission of a signal in the optical fiber at a desired wavelength. In one embodiment, the waveguide resonator comprises an optical fiber loop which is coupled to the optical fiber. The intracavity element may comprise an optical fiber loop coupled to the main Fabry-Perot resonator or it may comprise a waveguide Mach-Zehnder interferometer or a three coupler waveguide Mach-Zehnder interferometer. In a further embodiment, the control circuit element further comprises link initiation and maintenance means. In yet other embodiments, other resonators, such as linear or pillbox resonators, may be used. Other intracavity elements, such as linear resonators, may also be used. Grating or acousto-optic assisted wavelength selective weak coupling from resonator to system fiber may also be used.

Brief Description of the Drawing

FIG. 1 is a schematic representation of one optical communications system according to this invention;

FIG. 2 is a schematic representation of an optical receiver module of a system according to this invention;

FIGS. 3-5 are schematic representations of several embodiments of an intracavity element design useful with an optical receiver or optical transmitter module of a system according to this invention;

FIGS. 6-7 are schematic representations of evanescent coupling intracavity elements useful in this invention;

FIG. 8 is a schematic representation of an optical transmitter module of a system according to this invention;

FIGS. 9-11 are schematic representations of several embodiments of an intracavity element design useful with an optical transmitter or optical receiver module of a system according to this invention; and

FIG. 12 is a schematic representation of an evanescent coupler.

For reasons of clarity, the elements of devices and systems according to this invention are not drawn to scale.

Detailed Description

One type of wavelength division multiplexing system according to this invention is schematically depicted in FIG. 1. The system comprises a plurality of transceivers indicated as T1, T2, etc., TN-I, TN, which are optically coupled to an optical transmission line, F. The optical transmission line, commonly referred to as an optical fiber, has characteristics that are well known to those skilled in the art and need not be described further in detail. The optical fiber comprises a high refractive index core surrounded by a low index cladding. It should preferably be a single mode optical fiber. The transceivers comprise both transmitter and receiver modules. The transceivers are independently tunable to common frequencies and thus may be coupled to each other when, for example, the receiver module of a first transceiver is tuned to the frequency of the transmitter module of a second transceiver. For a complete two way link, the receiver module of the second transceiver is tuned to the frequency of the transmitter module of the first transceiver. The transmitter and receiver modules are optically coupled to the system fiber by evanescent field coupling as described in detail later. The number of transceivers is not critical and may be as large as, or even larger than, the number of optical channels.

Each transceiver may also include its own independent local control system which performs functions such as tuning, internal optical alignment, link initiation and maintenance, plus systems functions. Each transceiver can be independently coupled to the optical transmission line anywhere along the length of the line and this system may thus be used for loop plant and local area network applications as well as trunks applications. The tunability permits any transceiver to communicate with any other transceiver thus performing a switching function. This is useful in, for example, factory automation local area networks where the robots or computers would be able to communicate directly with any other robot or computer or in office automation applications.

FIG. 2 is a schematic representation of the receiver module of a transceiver as depicted in FIG. 1. The receiver comprises a main resonator guide 10 which further comprises an intracavity dispersive loss element (IE) 50. There is also a photodetector (PD) 500, a control circuit element (CCE) 100 and a receiver (REC) 300. The control circuit element is connected to the photodetector 500, main resonator guide 10, the dispersive loss element 50, and the receiver 300. The main resonator guide is optically coupled to both the optical fiber and photodetector by evanescent coupling means 20. The control circuit provides means, as indicated by arrows 1000 and 1010, to tune the main resonator guide and the intracavity element to desired frequencies. The receiver takes the electrical signal from the photodetector and recovers the information from the signal. The photodetector and resonator may be evanescently coupled although other means of optical coupling may also be used.

Although the main resonator guide is depicted as being a loop, it is to be understood that other resonator configurations are contemplated. For example, linear and pillbox resonators are also contemplated. It can be noted that a pillbox resonator is a special case of a loop resonator in which the ring diameter shrinks until the center hole vanishes.

The tunability of the resonator is desirable because it enables the wavelength of the receiver resonator of a first transceiver to match the wavelength of the transmitter of a second transceiver. The tunability may be accomplished by, for example, varying the effective optical length of the resonator by means such as the electro-optic effect or mechanical strain. This moves the Fabry-Perot resonances. It is often desirable that most of the power from the channel selected be coupled to the detector. For this to be accomplished, the system guide to resonator coupling should equal the detector to main resonator guide coupling.

The intracavity dispersive loss element 50 is frequency dependent and selects a single Fabry-Perot resonant peak of the main resonator by lowering the Q of the cavity at other resonances. Two conditions must be satisfied at the main resonator cavity resonance. First, the intracavity element loss must be a minimum and, second, there must be an integral number of optical wavelengths per main resonator cavity roundtrip. The resonator is typically very weakly coupled to the system waveguide, that is, the optical fiber, to avoid any appreciable coupling to undesired channels. The high cavity Q, typically $10^2$, resonantly enhances the coupling of the desired signal and even a small loss eliminates unwanted resonances. For example, a 10 percent loss at the first unwanted resonance is typically sufficient. The intracavity element transmission peak can be relatively broad because it is effectively sharpened by the intracavity resonance. However, the peak loss must be low. The control circuit also aligns the transmission peak of the intracavity loss element with the cavity resonance selected. Tuning means 1000 varies the appropriate optical path length. The No must be tracked simultaneously to tune the receiver frequency to the desired transmitter. As will be explained later, after this has been accomplished, the receiver must track the transmitter selected.

The receiver module comprises a control circuit element which uses the output of the photodetector 500 to track the tuning means 1010 to align one of the main resonator Fabry-Perot resonances with a desired optical signal. It may further track tuning means 1000 to align the intracavity element 50 to select the resonance aligned with the desired signal.

The operation of the main resonator guide may be better understood from the following discussion. The operation of the resonator may be easily understood by considering the analogy with a conventional discrete optics Fabry-Perot interferometer which has two 99 percent reflecting and 1 percent transmitting mirrors which are parallel to each other and separated by a distance, $\underline{d}$, to form a resonant cavity. If a beam of monochromatic light is now incident upon one of the mirrors, initially 1 percent of the beam power, that is, 10 percent of the electric field, will be transmitted into the cavity and 99 percent of the power will be reflected. The light inside the cavity travels to the other or output mirror and is reflected back toward the input mirror where it is again reflected. If the roundtrip length, 2d, is exactly an integral number of wavelengths, the reflected wave will add in phase with the input light and interfere constructively. As a result, the cavity field is now approximately 0.2 times the incident field and the cavity power is approximately 0.04 times the incident power. After the next roundtrip, the field is approximately 0.3 times the incident field and the cavity power is approximately 0.09 times the incident power. Eventually, the resonant cavity power is approximately 99 times the incident power and the 1 percent leakage out the input mirror is exactly 180 degrees out of phase with the 99 percent reflection for the incident beam. The two cancel by destructive interference and leave essentially no reflected power. The 1 percent leakage of the 99 times incident power resonant wave at the output mirror gives a transmitted beam of essentially the same power as the incident beam. Thus, if the Fabry-Perot resonator is tuned exactly for the wavelength of the incident beam, that is, if $2d = n\lambda$, the incident beam is transmitted directly through the Fabry-Perot cavity in the steady state. However, the Fabry-Perot transmission peak is exceedingly narrow in wavelength because the cavity light must remain in phase with the input light over many cavity roundtrips to build up a large cavity resonant power. As will be appreciated, the relatively long build-up time of the cavity power also reflects the narrow bandwidth achievable. For example, a pulse whose duration is short compared to the resonator round trip transit time will be rejected as its frequency spectrum is too broad.

The loop Fabry-Perot main resonator guide is analogous. The weak evanescent couplers correspond to the input and output mirrors and the resonant condition is the requirement that there be an exactly integral number of wavelengths around the loop. If there is monochromatic light being transmitted through the system fiber, it will be incident on the evanescent coupling means to the main resonator guide. Initially most of the energy will pass by and only a fraction of the energy is coupled into the resonator. However, as has been explained, if the incident light has a component at a resonant frequency, a large resonant wave at the resonant frequency will eventually build up inside the loop and the resonant power coupled back to the waveguide then cancels most of the incident power remaining in the resonator guide. The resonant power coupled to the detector unit is typically most of the intensity originally incident in the fiber. The weakness of this evanescent coupling means further ensures negligible coupling to and, therefore, negligible attenuation of other off-resonant optical channel frequencies.

However, the receiver bandwidths are sufficiently narrow as compared to the optical carrier frequency that a control system should generally be used to provide frequency stabilization. It is also apparent that a simple loop resonator has multiple, regularly spaced resonances as do all Fabry-Perot resonators. If the desired resonance has $n$ wavelengths per cavity roundtrip, the next higher frequency resonance has $n + 1$ and the next higher $n + 2$, etc. The spacing between the peaks is called a "free spectral range" (FSR). The intracavity element is used to select the single Fabry-Perot peak by lowering the loop Q at the unwanted resonances.

Evanescent couplers are used for both the input and output coupling to the main resonator guide as well as in some applications which will be discussed later. An evanescent coupler comprises two waveguides in such close proximity to each other over part of their length that the propagating modes in the two waveguides overlap. This overlap couples energy between the two guides. It should be noted that the two waveguide cores typically do not touch each other because the propagating mode is not confined to the core. Outside the core, the mode comprises an evanescent wave which typically decays exponentially in distance from the core. The principal coupling overlap is between the evanescent tails of the propagating modes in the two guides. For broad band coupling, $k(\omega)$ should be approximately equal in the two waveguides. $\omega$ is $2\pi f$, where f is the frequency.

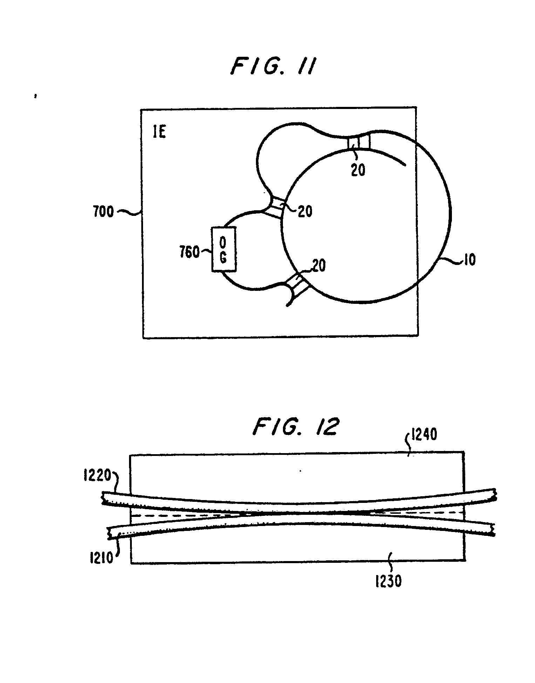

An exemplary evanescent coupler is depicted in sectional view in FIG. 12. It comprises two blocks 1230 and 1240 fabricated from, for example, glass or plastic, having grooves cut within them into which two optical fibers 1210 and 1220, respectively, are inserted. Each fiber follows a curved path, as shown, and is embedded at the edges of the block but rises to the surface near the center of the block. The fibers are curved to diverge from the coupling region to facilitate their handling and coupler fabrication. The blocks are polished so that a portion of the fiber cladding is removed near the center of the block where the fiber rises to the surface. The blocks are then placed together to form a complete coupler. An index matching optical cement may be used to hold the blocks together and to thereby improve the coupling and reduce scattering loss.

Evanescent couplers between two integrated optic waveguides may be made simply by fabricating the two waveguides close together on a common substrate.

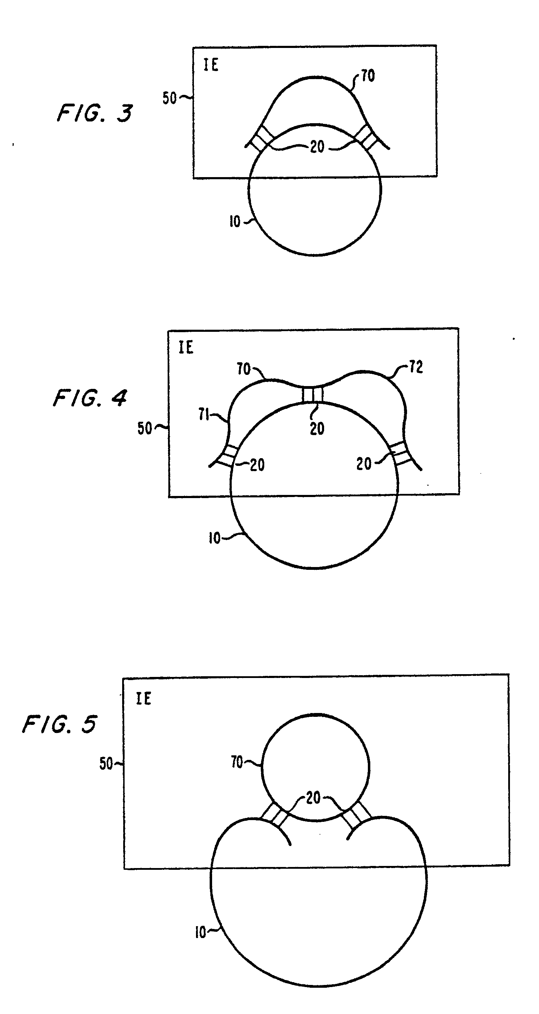

FIGS. 3-5 are schematic representations of several embodiments of an intracavity element (IE) design according to this invention. The intracavity elements fall into one of at least three preferred general categories. The first category comprises the Mach-Zehnder IE such as those depicted in FIGS. 3 and 4. FIGS. 3 and 4 depict, respectively, two and three coupler Mach-Zehnder IEs.

In the two coupler Mach-Zehnder IE, the resonant wave is split between the two guides 10 and 70 at the first coupler and the two parts travel different paths i.e., different optical path lengths to the second coupler. If they arrive in phase at the second coupler, all of the power is returned to the main resonator guide. If they do not arrive in phase, some remains in the second guide and is lost. A disadvantage of the two coupler IE is the requirement that the two couplers 20 be of exactly the same coupling strength. This disadvantage is removed with a modified Mach-Zehnder three coupler embodiment depicted in FIG. 4 in which the second guide 70 comprises loops 71 and 72. This avoids matching the coupling strength and furthermore has extra selectivity. It should be noted that the two loops of the three coupler embodiment are each characterized by their own free spectral range and the receiver module control circuit element therefore has an extra alignment requirement. Tuning is achieved in both by varying the optical path length of the Mach-Zehnder loops by, for example, mechanical strain or electro-optic means. The two coupler version of FIG. 3 is the waveguide analog of the discrete optic Mach-Zehnder interferometer. See, for example, Born and Wolf, Principles of Optics , 4th edition, pp. 312-315, 1970. The IE transmission peaks occur when the difference in the optical path lengths is an integral number of wavelengths. The three coupler embodiment is presently preferred because of simplicity of fabrication and selectivity. As shown, guide 70 is coupled to the main resonator 10 by evanescent coupling means 20. It should be noted that complete decoupling between guides 10 and 70 is not required and may be difficult to obtain in integrated optics embodiments.

The second IE category comprises a resonator IE such as that depicted in FIG. 5. The loop resonator 70 is coupled to the main resonator by evanescent coupling means 20. The transmission peaks are at frequencies where there are an integral number of wavelengths per round trip. Although a loop resonator is depicted, it is to be understood that other resonators may be used. For example, pillbox or linear resonators may also be used.

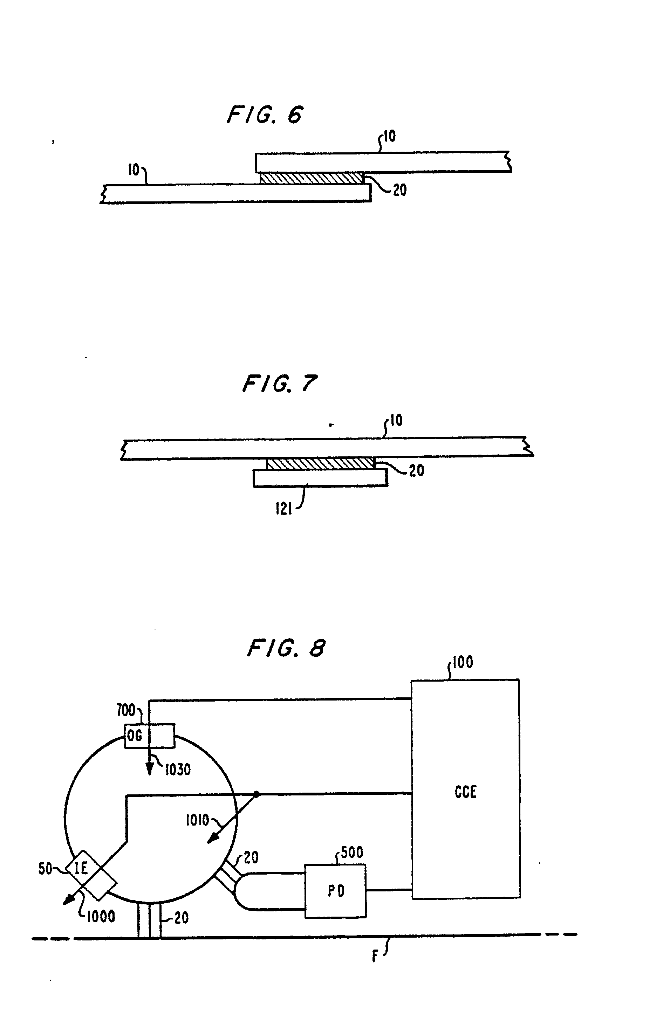

Evanescent coupler IEs are depicted in FIGS. 6 and 7. These are also potentially of interest, particularly in integrated optics embodiments.

FIG. 6 depicts a segment of an optical resonator having a main guide 10, the ends of which are coupled to each other by an IE comprising evanescent coupling means 20. FIG. 7 depicts an IE in which the main waveguide 10 is coupled to a second waveguide 121 by evanescent coupling means 20. Versions with identical propagation constants in the two guides and multiple crossover lengths in the coupling region correspond to the no decoupling limit in the Mach-Zehnder IE. The apparent path length difference seen by the modes of the two coupled waveguides can be tuned electro-optically by separate electrodes on the two guides.

The resonator IEs are not presently as attractive as are the Mach-Zehnder IEs. However, the resonator IEs are of special interest for integrated optics embodiments because their potential extra loss penalty is more easily controlled. They also have sharper transmission peaks. Although this extra selectivity is often not needed in receivers, it may be useful in transmitters if oscillation in unwanted or parasitic modes becomes a problem. The drawbacks to resonator IEs include higher potential losses at the transmission peaks which are a lesser problem in integrated optics embodiments.

The receiver tuning will now be described for a main resonator for an exemplary embodiment with a two coupler Mach-Zehnder IE. Assume the receiver will be tuned to a still higher frequency. The receiver bandwidth is defined by the main cavity resonance selected by the IE and this resonance is tuned upward in frequency by shortening the optical length of the main resonator guide. The IE peak frequency is tracked to follow by decreasing the path length difference by the same means. When the tuning has moved the main resonator guide resonance up by one free spectral range, the control system can step the main resonator back by one free spectral range thus leaving the IE unchanged. The next higher Fabry-Perot resonance is now aligned with the IE peak and the receiver pass band is unchanged by the stepback because the next higher Fabry-Perot peak is directly substituted for the original peak. When the frequency is tuned by another main cavity free spectral range, the control system executes yet another mode stepback. Similarly, when the IE has been tuned through one of its free spectral ranges, the control circuit element executes an IE stepback of one free spectral range. This tuning technique ensures that neither the main resonator nor the IE needs to tune significantly more than one free spectral range. To tune either through a free spectral range requires an optical path length change of only one wavelength.

When the receiver is initially turned on, the IE must be aligned with the main resonator guide Fabry-Perot peak. One way for alignment to be detected is for the receiver to be lined up on a transmitter. Thus, an exemplary initial alignment search executed by the control circuit element assumes that at least one transmitter is operating and then executes a two-dimensional search over the main resonator guide free spectral range and the IE free spectral range. This is effectively a search over the entire system bandwidth. The step size in each direction is typically of the order of the free spectral range divided by the finesse so that any transmitter will be detected. Finesse is the ratio of the free spectral range to the full width at half maximum of the resonance. When a transmitter is detected, the alignment optimization tracking routine is called to home in on the exact alignment. Once exact alignment is achieved, the overall systems controller can begin data transmission.

The receiver tracks the transmitter while data is being passed. This is performed by a two-dimensional optimization routine which continually varies both the MRG and the IE tuning so that they are aligned with the transmitter frequency. When either reaches the center of the tuning range within appropriate limits, a mode stepback is executed during the appropriate control interval. Note that a mode stepback will interrupt the data stream and introduce errors unless the data as transmitted over the link contains periodic "control intervals" during which mode stepbacks, and other control functions, are executed.

Dead spaces in the information stream which are useful for control intervals are expediently created by transmitting information at a rate faster than received by the transmitter as well as data buffering at both transmitter and receiver.

It should be noted that the receiver rejection of off-resonance optical channels is typically approximately the product of the main resonator guide to system fiber coupling times the main resonator guide to detector coupling. If both are approximately 1 percent couplers, the cross talk rejection is about $10^{-4}$. This is not adequate for applications having extremely large numbers of channels.

However, this problem may be avoided by increasing the resonator Q and decreasing the coupling strength because the cross talk is proportional to the square of the weak coupling strength. An alternative solution is to implement an embodiment having two main resonator guides. The first resonator is coupled to the system fiber and the second resonator is evanescently coupled to the first resonator. The optical signal for the photodetector and signal recovery is taken from the second resonator. The first resonator must include an IE and the second resonator typically includes an IE although it need not. The first resonator further includes a monitor detector which extracts enough signal so that a single resonator receiver control system in the control circuit element can be used to run it. The second resonator is tracked to be aligned with the channel transmitted by the first resonator. This technique doubles the cross talk rejection in dB. A third possible solution uses a resonator IE and couples the detector to the IE resonator rather than the main resonator. A fourth solution uses wavelength selective evanescent coupling from resonator to fiber.

An embodiment of a transmitter according to this invention is depicted schematically in FIG. 8. The transmitter further comprises an optical gain element 700 in addition to the elements depicted for the optical receiver module. The addition of the optical gain element turns the main resonator into a laser with the particular lasing resonance being selected by the IE. Tuning means 1030 varies the optical path length within optical gain element 700. The transmitter intracavity loss element is generally the same as those described for the receiver. The transmitter resonant cavity must be weakly coupled to the system waveguide to avoid coupling appreciable power from other channels. Thus, the transmitter resonator must have a high Q.

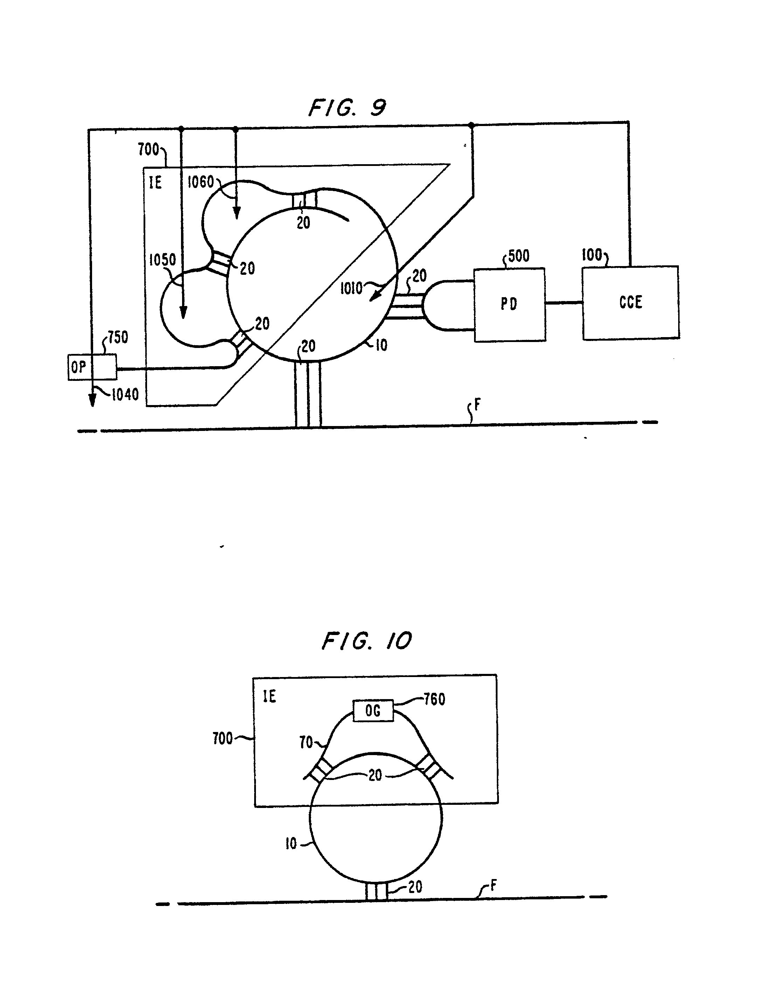

There are presently two classes of preferred optical gain elements. The first comprises a waveguide section containing an optically pumped lasing dopant such as neodymium, i.e., the waveguide and dopant comprise the optical gain element. Either the waveguide core or cladding or both may be doped. The system presently preferred is neodymium in glass, and the inhomogeneous broadening due to the glass spreads the multiple Nd lines to form a continuum. An exemplary Nd-doped optical fiber transmitter according to this invention is shown schematically in FIG. 9. It comprises the main resonator guide 10 coupled to the system fiber F by evanescent coupling means 20 and the three coupler Mach-Zehnder IE 700. This configuration permits the main resonator guide and IE to be made from a single fiber which can then be end-pumped by pump light source (OP) 750. End-pumping is advantageous because the pump light travels the entire length of the fiber and is therefore efficiently absorbed. Pump source 750 can be a conventional light source such as a GaAs laser or light emitting diode coupled to either the core or cladding. Tuning means 1040 controls the optical pumping level. Tuning means 1050 and 1060 tune the sections of the Mach-Zehnder IE.

The Nd-doped glass resonator is an intrinsically high Q laser because Nd is a four-level lasing system. Therefore, the nonexcited atoms do not absorb at the lasing frequency. This is desirable because it means that the unpumped resonator has a high Q and can be used as an optical receiver either for the transmitter frequency control routine or as a data receiver. The latter lends itself readily to transceiver embodiments in which one resonator is time shared between transmitting and receiving.

An optical gain element comprises an organic dye in, for example, plastic.

The second optical pumping technique is prism or evanescent coupling of the pump light to the cladding.

The second class of transmitter optical gain elements comprise semiconductor optical gain elements. Typically, this would be a semiconductor laser chip with antireflection coated facets so that the lasing is due to external feedback. However, because present semiconductor gain chips have both high gain and high absorption, they typically require impedance matching to the high Q main resonator. One way this may be achieved is by a modified two coupler Mach-Zehnder IE 700 as shown in FIG. 10. This structure is analogous to the two coupler Mach-Zehnder IE depicted in FIG. 3 except that the second waveguide 70, which is the alternative optical path, is interrupted to include the semiconductor gain element (OG) 760. The gain element is advantageously optically coupled to the fiber by lenses, as is well known to those skilled in the art.

It should also be noted that a tunable semiconductor laser can be substituted for the optical gain element if the laser is tuned to the main resonator resonance. The main resonator then provides extra feedback which narrows the semiconductor laser's linewidth.

The modified three coupler Mach-Zehnder IE is illustrated in FIG. 11. This embodiment is analogous to the modified three coupler Mach-Zehnder IE depicted in FIG. 9 but one of the loops is interrupted to include an optical gain element (OG) 760. The fraction of the resonant power that is coupled to the gain element is equal to the power coupling ratio of the last IE coupler and that coupler is typically weaker than the other two IE couplers. Any Mach-Zehnder IE can be used as an optical impedance matching coupler by inserting the optical gain element in one of the loops.

A still further class of semiconductor optical gain elements comprises separate lasing and coupling resonators. The coupling resonator is weakly evanescently coupled to the system fiber and the lasing resonator is weakly coupled to the coupling resonator.

The two-resonator transmitter approach has several advantages. First, the lasing and coupling functions may be optimized separately. For example, a low Q lasing resonator driving a high Q coupling resonator is a form of optical impedance matching. Second, the lasing resonator optical gain can be turned off and the high Q coupling resonator can be used as a receiver. In the two resonator semiconductor gain element designs, turning off the semiconductor optical gain element spoils the Q of the lasing resonator thus effectively decoupling it from the coupling resonator which can then be used as a receiver. For this reason, the two resonator transmitter designs are preferred for some applications including those transceiver designs in which one resonator is time shared between transmitting and receiving.

Transmitter tuning is similar to the receiver tuning already described. The lasing frequency is defined by the main cavity resonance selected by the IE. As with the receiver, the frequency is tracked by tuning the main cavity resonance and tracking the IE peak to follow. As has been explained, both are tuned by varying the appropriate optical path length. The control system initiates and also optimizes and maintains the transmitter optical alignment. Initiation is by, for example, IE scanning and detection of the onset of lasing. This means tracking the IE to track the lasing resonance of the main resonator. This is expediently performed by using the control circuit element to vary the IE tuning to maximize the ratio of the laser output to pump power. The transmitter control also provides means to modulate the transmitted signal to permit information to be transmitted. The modulation may be either frequency modulation or amplitude modulation. Techniques for these types of modulations are well known to those skilled in the art using the elements described, and need not be described in detail.

The different transmitters should be tracked to avoid optical channel overlap and to maintain the required frequency separation. It is a systems level function, and will be described below with the systems level operation.

One exemplary embodiment of my invention is a transmission system comprising a plurality of transmitters forming a first unit near one end of the transmission fiber and a plurality of receivers forming a second unit near the other end of the transmission fiber. The first unit further comprises a control circuit element comprising a transmitter central control unit and a coupled transmitter monitor receiver. The second unit further comprises a control circuit element comprising a receiver central control unit. In operation, the transmitter central control unit scans the frequency band with the monitor receiver and issues the required corrective tuning commands to each transmitter's local control routine. At system start-up, the transmitters have random frequencies and the control routine sorts them by having each transmit its own "call sign." The call sign transmission also allows the receiver central control unit to scan each receiver to lock on its designated transmitter. Once lock is achieved, it is maintained by the receiver's local control routine. Once all receivers are aligned, the receiver central control so notifies the transmitter central control via a backlink, e.g., a similar transmission system in the opposite direction, and data transmission begins.

A preferred embodiment comprises a plurality of independent transceivers, each of which can be coupled to the system fiber anywhere along its length, and each of which can tune to any other. Ideally, the transceiver's overall control system comprises frequency control means to avoid channel overlap plus link initiation means.

The first transceiver control system function is tracking the individual transmitter's frequency to avoid channel overlap. The nearest neighbor control technique, in which each transceiver responds only to the position in frequency of the two spectrally neighboring optical channels, is preferred. Such a control system first determines the relative spectral locations of the two neighboring channels, typically by turning off the transmitter optical gain element, and using the transmitter resonator as a receiver to execute a frequency scan to find the neighboring channels. The frequency scan is executed during a control interval to avoid interruption to the data transmission. The transmitter then resumes transmitting at the original frequency. A channel spacing correction function (CSCF) which may be implemented by, for example, the CCE, is then used to calculate the corrective tuning increment and the transmitter then tunes to the new frequency slowly enough to permit the receiver to which the data is being sent to follow. Thus, the tuning speed must be slower than the response rate of the receiver alignment/tracking routine. The cycle then repeats, beginning with a new scan during the next control interval.

The nearest neighbor CSCF used in the individual transmitters must be chosen so that the string of transmitters in frequency space is stable. The presently preferred CSCFs have mechanical analogs. A simple harmonic CSCF mimics a plurality of masses coupled by springs. Any disturbance propagates down the plurality of masses, i.e., channel string, and is absorbed at the end mass. The diffusive CSCFs mimic a plurality of massloss points coupled by springs and dashpots. In a diffusive CSCF, the corrective increment is proportional to the error. A "hard shell core potential" can be added to either to avoid a tuning increment causing a channel overlap.

Double-sided CSCFs track the transmitter frequency to the average of the nearest neighbor frequencies on both sides except for the transmitters at the ends of the string. These are tracked to the desired channel frequency spacing from their nearest neighbor. Single-sided CSCFs track the transmitter frequency to the desired channel spacing above the low frequency neighbor. The single-sided CSCFs are preferred because the channel spacing information is applied at each transceiver.

Note the CSCF typically may also comprise a small drift term adding a small step towards the peak of the gain curve to each frequency correction. The effect of this term in all the transceivers is to center the channel string under the optical gain curve peak.

A second transceiver control system function is called "link initiation." Ideally, this function should allow any transceiver to call any other. In call initiation, the transmitter of the initiating transceiver emits the call sign of the desired receiving transceiver, plus its own call sign on a prescribed link initiation frequency or frequencies. The receivers of transceivers not in use listen at that frequency for their call signs and when a transceiver hears its own call sign, it calls the initiating transceiver; the link is then complete and the two transceivers tune off the link initiating frequency and begin transmitting information. After the transmission is completed, the receivers retune to the link initiation frequency. It should be noted that call initiation is greatly simplified in transceivers that use a common resonator for transmitting and receiving.

A still further embodiment uses a coupling technique that allows one transmitter to broadcast to many receivers, e.g., for a cable TV system or for a subnetwork feature in which several transceivers share a common optical frequency and take turns passing data. Such a subnetwork can be created at any time out of any subset of the system's transceiver by modifying the link initiation to allow one initiating transceiver to call many responding transceivers.

## Claims

1. An optical device comprising:
   a tunable waveguide resonator (10) adapted to be evanescently coupled to an optical waveguide (F); and
   an intracavity element (50) optically coupled to the resonator;
   CHARACTERIZED BY
   a photodetector (500) coupled to the resonator;
   a control circuit element (100) responsive to a signal from the photodetector to tune the resonator; and
   further comprising either a receiver (300) or an optical gain element (OG).

2. An optical device in accordance with claim 1, CHARACTERIZED IN THAT
   the device further comprises:
   a receiver (300);
   whereby the device is adapted to receive optical signals from the optical waveguide (F).

3. An optical device in accordance with claim 1, CHARACTERIZED IN THAT
   the resonator further comprises:
   an optical gain element (OG);
   whereby the device is adapted to transmit optical signals to the optical waveguide (F).

4. An optical device in accordance with claim 1, CHARACTERIZED IN THAT
   the control element uses an electro-optic effect to vary the optical length of the resonator.

5. An optical device in accordance with claim 1, CHARACTERIZED IN THAT
   the control element uses mechanical strain to vary the optical length of the resonator.

6. An optical device in accordance with claim 1, CHARACTERIZED IN THAT

   the control circuit element tunes the resonator to a predetermined frequency.

7. An optical device in accordance with claim 1, CHARACTERIZED IN THAT
the control circuit element tunes the resonator to a predetermined band of frequencies.

8. An optical device arranged in accordance with claims 2 and 3 to form a transceiver (T1,TN).

9. An optical device in accordance with claim 8, CHARACTERIZED IN THAT
the transceiver is connected to the waveguide at the junction where the waveguide interconnects with another optical waveguide whereby there is a transfer of signals between the two waveguides as selected by the transceiver.

10. An optical device in accordance with claim 1, CHARACTERIZED IN THAT
the optical waveguide comprises an optical fiber.

11. An optical device in accordance with claim 1, CHARACTERIZED IN THAT
the optical waveguide is an optical fiber.

12. An optical device in accordance with claim 9, CHARACTERIZED IN THAT
the transceiver is connected to a waveguide comprising an optical fiber.

13. An optical device in accordance with claim 9, CHARACTERIZED IN THAT
the transceiver is connected to an optical waveguide which is an optical fiber.

14. An optical device in accordance with claims 2 and 3, CHARACTERIZED IN THAT
wherein at least one of the optical devices arranged for receiving is located at a first location on the optical waveguide and at least one of the optical devices arranged for transmitting is located at a second location on the optical waveguide.

15. An optical device in accordance with claim 14, CHARACTERIZED IN THAT
a plurality of optical devices arranged for receiving are located at a first location and a plurality of optical devices arranged for transmitting are located at a second location.

16. An optical device in accordance with claim 8, CHARACTERIZED IN THAT
wherein at least one of the transceivers for transmitting and receiving is positioned at a first location on the optical waveguide and at least another one of the transceivers for transmitting and receiving is positioned at a second location on the optical waveguide.

17. An optical device in accordance with claim 8, CHARACTERIZED IN THAT
at least one transceiver is coupled to a first optical waveguide and at least one transceiver is coupled to a second optical waveguide and signals are transmitted between the transceivers.

18. An optical device in accordance with claim 8, CHARACTERIZED IN THAT
one transceiver is coupled between two optical waveguides and a second transceiver is coupled between the two optical waveguides wherein the direction of transmission of information signals in the two transceivers is opposite to one another.

19. An optical device in accordance with claim 1, CHARACTERIZED IN THAT
the control circuit element (100) tunes the intracavity element by varying the optical path length in the intracavity element.

20. An optical device in accordance with claim 19, CHARACTERIZED IN THAT
the intracavity element comprises a loop Fabry-Perot resonator.

21. An optical device in accordance with claim 19, CHARACTERIZED IN THAT
the intracavity element comprises a linear Fabry-Perot resonator.

22. An optical device in accordance with claim 19, CHARACTERIZED IN THAT
the intracavity element comprises a tunable interferometer.

23. An optical device in accordance with claim 22, CHARACTERIZED IN THAT
the interferometer comprises a two-coupler Mach-Zehnder waveguide interferometer.

24. An optical device in accordance with claim 22, CHARACTERIZED IN THAT
the interferometer comprises a three-coupler Mach-Zehnder waveguide interferometer.

25. An optical device in accordance with claim 19, CHARACTERIZED IN THAT

the intracavity element comprises an evanescent coupler.

26. An optical device in accordance with claim 19, CHRACTERIZED IN THAT
the intracavity element comprises a pillbox cavity resonator.

27. An optical device in accordance with claim 19, CHARACTERIZED IN THAT
the intracavity element comprises a grating-assisted evanescent coupler.

28. An optical device in accordance with claim 19, CHARACTERIZED IN THAT
the control circuit element comprises means to tune the intracavity element and the waveguide resonator to a common frequency.

29. An optical device in accordance with claim 27, CHARACTERIZED IN THAT
the control circuit element comprises means to execute mode stepbacks of the waveguide resonator.

30. An optical device in accordance with claim 27, CHARACTERIZED IN THAT
the control circuit element comprises means to execute mode stepbacks of the intercavity element.

31. An optical device in accordance with claim 30, CHARACTERIZED IN THAT
the device comprises means to create control intervals.

32. An optical device in accordance with claim 31, CHARACTERIZED IN THAT
the control circuit element comprises: means to maintain optical alignment with a received optical signal.

33. An optical device in accordance with claim 3, CHARACTERIZED IN THAT
the optical gain element comprises an optically pumped lasing dopant.

34. An optical device in accordance with claim 33, CHARACTERIZED IN THAT
the dopant comprises neodymium.

35. An optical device in accordance with claim 33, CHARACTERIZED IN THAT
the dopant comprises an organic dye.

36. An optical device in accordance with claim 33, CHARACTERIZED IN THAT

the optical gain element comprises an optical gain medium.

37. An optical device in accordance with claim 36, CHARACTERIZED IN THAT
the optical gain medium comprises a semiconductor.

38. An optical device in accordance with claim 33, CHARACTERIZED IN THAT
the optical gain element comprises a semiconductor.

39. An optical device in accordance with claim 1, CHARACTERIZED IN THAT
the resonator comprises a linear Fabry-Perot cavity

40. An optical device in accordance with claim 1, CHARACTERIZED IN THAT
the resonator comprises a loop Fabry-Perot cavity.

41. An optical device in accordance with claims 39 or 40, CHARACTERIZED IN THAT
the control element varies the optical length of the resonator.

**Revendications**

1. Un dispositif optique comprenant :
un résonateur à guide d'ondes accordable (10) conçu pour être couplé de façon évanescente à un guide d'ondes optique (F); et un élément intracavitaire (50) en couplage optique avec le résonateur;
CARACTERISE PAR
un photodétecteur (500) couplé au résonateur;
un élément de circuit de commande (100) qui réagit à un signal provenant du photodétecteur de façon à accorder le résonateur; et
comprenant en outre un récepteur (300) ou un élément d'amplification optique (OG).

2. Un dispositif optique selon la revendication 1, CARACTERISE EN CE QUE
le dispositif comprend en outre :
un récepteur (300);
grâce à quoi le dispositif est capable de rece voir des signaux optiques provenant du guide d'ondes optique (F).

3. Un dispositif optique selon la revendication 1, CARACTERISE EN CE QUE

le résonateur comprend en outre :

un élément d'amplification optique (OG);

grâce à quoi le dispositif est capable d'émettre des signaux optiques vers le guide d'ondes optique (F).

4. Un dispositif optique selon la revendication 1, CARACTERISE EN CE QUE

l'élément de commande utilise un effet électro-optique pour faire varier la longueur optique du résonateur.

5. Un dispositif optique selon la revendication 1, CARACTERISE EN CE QUE

l'élément de commande utilise une contrainte mécanique pour faire varier la longueur optique du résonateur.

6. Un dispositif optique selon la revendication 1, CARACTERISE EN CE QUE

l'élément de circuit de commande accorde le résonateur sur une fréquence prédéterminée.

7. Un dispositif optique selon la revendication 1, CARACTERISE EN CE QUE

l'élément de circuit de commande accorde le résonateur sur une bande de fréquences prédéterminée.

8. Un dispositif optique conçu conformément aux revendications 2 et 3 pour former un émetteur-récepteur (T1, TN).

9. Un dispositif optique selon la revendication 8, CARACTERISE EN CE QUE

l'émetteur-récepteur est connecté au guide d'ondes à la jonction à laquelle le guide d'ondes est interconnecté avec un autre guide d'ondes optique, grâce à quoi il y a un transfert de signaux entre les deux guides d'ondes, de la manière sélectionnée par l'émetteur-récepteur.

10. Un dispositif optique selon la revendication 1, CARACTERISE EN CE QUE

le guide d'ondes optique comprend une fibre optique.

11. Un dispositif optique selon la revendication 1, CARACTERISE EN CE QUE

le guide d'ondes optique est une fibre optique.

12. Un dispositif optique selon la revendication 9, CARACTERISE EN CE QUE

l'émetteur-récepteur est connecté à un guide d'ondes comprenant une fibre optique.

13. Un dispositif optique selon la revendication 9, CARACTERISE EN CE QUE

l'émetteur-récepteur est connecté à un guide d'ondes optique qui est une fibre optique.

14. Un dispositif optique selon les revendications 2 et 3, CARACTERISE EN CE QUE

l'un au moins des dispositifs optiques prévus pour fonctionner en réception est situé à un premier emplacement sur le guide d'ondes optique, et l'un au moins des dispositifs optiques prévus pour fonctionner en émission est situé à un second emplacement sur le guide d'ondes optique.

15. Un dispositif optique selon la revendication 14, CARACTERISE EN CE QUE

un ensemble de dispositifs optiques prévus pour fonctionner en réception sont situés à un premier emplacement, et un ensemble de dispositifs optiques prévus pour fonctionner en émission sont situés à un second emplacement.

16. Un dispositif optique selon la revendication 8, CARACTERISE EN CE QUE

l'un au moins des émetteurs-récepteurs prévus pour fonctionner en émission et en réception est placé à un premier emplacement sur le guide d'ondes optiques, et au moins un autre des émetteurs-récepteurs prévus pour fonctionner en émission et en réception est placé à un second emplacement sur le guide d'ondes optiques.

17. Un dispositif optique selon la revendication 8, CARACTERISE EN CE QUE

au moins un émetteur-récepteur est couplé à un premier guide d'ondes optiques et au moins un émetteur-récepteur est couplé à un second guide d'ondes optiques, et des signaux sont transmis entre les émetteurs-récepteurs.

18. Un dispositif optique selon la revendication 8, CARACTERISE EN CE QUE

un émetteur-récepteur est couplé entre deux guides d'ondes optiques et un second émetteur-récepteur est couplé entre les deux guides d'ondes optiques, et les directions de transmission de signaux d'information dans les deux émetteurs-récepteurs sont mutuellement opposées.

19. Un dispositif optique selon la revendication 1, CARACTERISE EN CE QUE

l'élément de circuit de commande (100) accorde l'élément intracavitaire en faisant varier la longueur de chemin optique dans l'élément intracavitaire.

20. Un dispositif optique selon la revendication 19, CARACTERISE EN CE QUE
l'élément intracavitaire comprend un résonateur de Fabry-Pérot en boucle.

21. Un dispositif optique selon la revendication 19, CARACTERISE EN CE QUE
l'élément intracavitaire comprend un résonateur de Fabry-Pérot linéaire.

22. Un dispositif optique selon la revendication 19, CARACTERISE EN CE QUE
l'élément intracavitaire comprend un interféromètre accordable.

23. Un dispositif optique selon la revendication 22, CARACTERISE EN CE QUE
l'interféromètre consiste en un interféromètre à guide d'ondes de Mach-Zehnder à deux coupleurs.

24. Un dispositif optique selon la revendication 22, CARACTERISE EN CE QUE
l'interféromètre consiste en un interféromètre à guide d'ondes de Mach-Zehnder à trois coupleurs.

25. Un dispositif optique selon la revendication 19, CARACTERISE EN CE QUE
l'élément intracavitaire comprend un coupleur évanescent.

26. Un dispositif optique selon la revendication 19, CARACTERISE EN CE QUE
l'élément intracavitaire comprend un résonateur à cavité circulaire.

27. Un dispositif optique selon la revendication 19, CARACTERISE EN CE QUE
l'élément intracavitaire comprend un coupleur évanescent assisté par un réseau de diffraction.

28. Un dispositif optique selon la revendication 19, CARACTERISE EN CE QUE
l'élément de circuit de commande comprend des moyens pour accorder l'élément intracavitaire et le résonateur à guide d'ondes sur une fréquence commune.

29. Un dispositif optique selon la revendication 27, CARACTERISE EN CE QUE
l'élément de circuit de commande comprend des moyens qui commandent au résonateur à guide d'ondes d'accomplir des pas en arrière pour les modes.

30. Un dispositif optique selon la revendication 27, CARACTERISE EN CE QUE
l'élément de circuit de commande comprend des moyens qui commandent à l'élément intracavitaire d'accomplir des pas en arrière pour les modes.

31. Un dispositif optique selon la revendication 30, CARACTERISE EN CE QUE
le dispositif comprend des moyens pour créer des intervalles de commande.

32. Un dispositif optique selon la revendication 31, CARACTERISE EN CE QUE
l'élément de circuit de commande comprend :
des moyens pour maintenir l'alignement optique avec un signal optique reçu.

33. Un dispositif optique selon la revendication 3, CARACTERISE EN CE QUE
l'élément d'amplification optique comprend un dopant produisant une émission laser sous l'effet d'un pompage optique.

34. Un dispositif optique selon la revendication 33, CARACTERISE EN CE QUE
le dopant comprend du néodyme.

35. Un dispositif optique selon la revendication 33, CARACTERISE EN CE QUE
le dopant comprend un colorant organique.

36. Un dispositif optique selon la revendication 33, CARACTERISE EN CE QUE
l'élément d'amplification optique comprend un milieu d'amplification optique.

37. Un dispositif optique selon la revendication 36, CARACTERISE EN CE QUE
le milieu d'amplification optique comprend un semiconducteur.

38. Un dispositif optique selon la revendication 33, CARACTERISE EN CE QUE
l'élément d'amplification optique comprend un semiconducteur.

39. Un dispositif optique selon la revendication 1, CARACTERISE EN CE QUE
le résonateur comprend une cavité de Fabry-Pérot linéaire.

40. Un dispositif optique selon la revendication 1,

CARACTERISE EN CE QUE
le résonateur comprend une cavité de Fabry-Pérot en boucle.

41. Un dispositif optique selon les revendications 39 ou 40,
CARACTERISE EN CE QUE
l'élément de commande fait varier la longueur optique du résonateur.

**Ansprüche**

1. optische Vorrichtung mit einen abstimmbaren Wellenleiterresonator (10), der an einen optischen Wellenleiter (F) abklingend angekoppelt werden kann und

ein an den Resonator optisch angekoppelten als Intrahohlraum wirksames Element (50);
gekennzeichnet durch
einen Fotodetektor (500), der an den Resonator angekoppelt ist, eine Steuerschaltung (100), die auf ein von dem Fotodetektor kommendes Signal anspricht, um den Resonator abzustimmen; ferner durch
einen Empfänger (300) oder einen optischen Verstärker (OG).

2. Optische Vorrichtung nach Anspruch 1, gekennzeichnet durch
einen Empfänger (300),
wobei die Vorrichtung zum Empfang von optischen Signalen von dem optischen Wellenleiter (F) ausgebildet ist.

3. Optische Vorrichtung nach Anspruch 1,

dadurch gekennzeichnet, daß der Resonator:
einen optischen Verstärker (OG) aufweist,
wobei die Vorrichtung zur Übertragung optischer Signale zu dem optischen Wellenleiter (F) ausgebildet ist.

4. Optische Vorrichtung nach Anspruch 1, dadurch gekennzeichnet, daß die Steuerschaltung sich des elektro-optischen Effektes bedient, um die optische Länge des Resonators zu verändern.

5. Optische Vorrichtung nach Anspruch 1, dadurch gekennzeichnet, daß die Steuerschaltung mittels mechanischer Spannung die optische Länge des Resonators verändert.

6. Optische Vorrichtung nach Anspruch 1, dadurch gekennzeichnet, daß die Steuerschaltung den Resonator auf eine vorbestimmte Frequenz abstimmt.

7. Optische Vorrichtung nach Anspruch 1, dadurch gekennzeichnet, daß die Steuerschaltung des Resonator auf ein vorbestimmtes Frequenzband abstimmt.

8. Optische Vorrichtung nach den Ansprüchen 2 und 3, die so angeordnet ist, daß sie einen Transceiver (T1, TN) bildet.

9. Optische Vorrichtung nach Anspruch 8, dadurch gekennzeichnet, daß der Transceiver an der Verbindungsstelle mit dem Wellenleiter verbunden ist, an der der Wellenleiter mit einem anderen optischen Wellenleiter verbunden ist, wodurch eine Übertragung der Signale zwischen den beiden Wellenleitern stattfindet, wie durch den Transceiver ausgewählt.

10. Optische Vorrichtung nach Anspruch 1, dadurch gekennzeichnet, daß der optische Wellenleiter eine optische Faser enthält.

11. Optische Vorrichtung nach Anspruch 1, dadurch gekennzeichnet, daß der optische Wellenleiter eine optische Faser darstellt.

12. Optische Vorrichtung nach Anspruch 9, dadurch gekennzeichnet, daß der Transceiver mit einem Wellenleiter, der eine optische Faser aufweist, verbunden ist.

13. Optische Vorrichtung nach Anspruch 9, dadurch gekennzeichnet, daß der Transceiver mit einem optischen Wellenleiter, der eine optische Faser ist, verbunden ist.

14. Optische Vorrichtung nach den Ansprüchen 2 und 3,
dadurch gekennzeichnet, daß mindestens eine der optischen Vorrichtungen zum Empfangen an einer ersten Stelle des optischen Wellenleiters angeordnet ist und mindestens eine der optische Vorrichtungen zum Aussenden an einer zweiten Stelle des optischen Wellenleiters angeordnet ist.

15. Optische Vorrichtung nach Anspruch 14, dadurch gekennzeichnet, daß eine Vielzahl von optischen Vorrichtungen zum Empfangen an einer ersten Stelle angeordnet und eine Vielzahl von optischen Vorrichtungen zum Aussenden an einer zweiten Stelle angeordnet ist.

16. Optische Vorrichtung nach Anspruch 8, dadurch gekennzeichnet, daß mindestens einer der Transceiver zum Aussenden und Empfangen an einer ersten Stelle des optischen Wellenleiters angeordnet ist, und daß mindestens ein anderer der Transceiver zum Aussenden und Empfangen an einer zweiten Stelle des optischen Wellenleiters angeordnet ist.

17. Optische Vorrichtung nach Anspruch 8, dadurch gekennzeichnet, daß mindestens ein Transceiver an einen ersten optischen Wellenleiter angekoppelt ist und mindestens ein Transceiver an einen zweiten optischen Wellenleiter angekoppelt ist und Signale zwischen den Transceivern übertragen werden.

18. Optische Vorrichtung nach Anspruch 8, dadurch gekennzeichnet, daß ein Transceiver zwischen zwei optischen Wellenleitern geschaltet ist und ein zweiter Transceiver zwischen den beiden optischen Wellenleitern angeschlossen ist, wobei die Übertragungsrichtung der Informationssignale in den beiden Transceivern entgegengesetzt zueinander ist.

19. Optische Vorrichtung nach Anspruch 1, dadurch gekennzeichnet, daß die Steuerschaltung (100) das intrahohlraum wirksame Element abstimmt, in dem die optische Weglänge des als Intrahohlraum wirksamen Elements verändert wird.

20. Optische Vorrichtung nach Anspruch 19, dadurch gekennzeichnet, daß das als Intrahohlraum wirksame Element einen Fabry-Perot-Schleifenresonator aufweist.

21. Optische Vorrichtung nach Anspruch 19, dadurch gekennzeichnet, daß das als Intrahohlraum wirksame Element einen linearen Fabry-Perot-Resonator aufweist.

22. Optische Vorrichtung nach Anspruch 19, dadurch gekennzeichnet, daß das als Intrahohlraum wirksame Element ein abstimmbares Interferometer aufweist.

23. Optische Vorrichtung nach Anspruch 22, dadurch gekennzeichnet, daß das Interferometer ein Mach-Zehnder-Interferometer mit einem 2-fach an gekoppelten Wellenleiter aufweist.

24. Optische Vorrichtung nach Anspruch 22, dadurch gekennzeichnet, daß das Interferometer ein Mach-Zehnder-Interferometer mit einem 3-fach an gekoppelten Wellenleiter aufweist.

25. Optische Vorrichtung nach Anspruch 19, dadurch gekennzeichnet, daß das als Intrahohlraum wirkende Element einen abklingenden Koppler aufweist.

26. Optische Vorrichtung nach Anspruch 19, dadurch gekennzeichnet, daß das als Intrahohlraum wirkende Element einen Pillbox-Hohlraum-Resonator aufweist.

27. Optische Vorrichtung nach Anspruch 19, dadurch gekennzeichnet, daß das als Intrahohlraum wirkende Element einen durch ein Gitter unterstützten, abklingenden Koppler aufweist.

28. Optische Vorrichtung nach Anspruch 19, dadurch gekennzeichnet, daß die Steuerschaltung eine Einrichtung aufweist, die das als Intrahohlraum wirksame Ebene und den Wellenleiterresonator auf eine gemeinsame Frequenz abstimmt.

29. Optische Vorrichtung nach Anspruch 27, dadurch gekennzeichnet, daß die Steuerschaltung eine Einrichtung aufweist, die eine Rücksetzung der Moden des Wellenleiterresonators ausführt.

30. Optische Vorrichtung nach Anspruch 27, dadurch gekennzeichnet, daß die Steuerschaltung eine Einrichtung aufweist, die eine Rücksetzung der Moden des als Intrahohlraum wirksamen Elements ausführt.

31. Optische Vorrichtung nach Anspruch 30, dadurch gekennzeichnet, daß die Vorrichtung eine Einrichtung aufweist, die Steuerintervalle erzeugt.

32. Optische Vorrichtung nach Anspruch 31, dadurch gekennzeichnet, daß die Steuerschaltung eine Einrichtung aufweist, die den optischen Abgleich mit einem empfangenen optischen Signal aufrechterhält.

33. Optische Vorrichtung nach Anspruch 3, dadurch gekennzeichnet, daß der optische Verstärker einen Dotierstoff für einen optisch gepumpten Laser aufweist.

34. Optische Vorrichtung nach Anspruch 33, dadurch gekennzeichnet, daß der Dotierstoff Neodym enthält.

35. Optische Vorrichtung nach Anspruch 33, dadurch gekennzeichnet, daß der Dotierstoff ein organischer Farbstoff ist.

36. Optische Vorrichtung nach Anspruch 33, dadurch gekennzeichnet, daß der optische Verstärker ein optisches Verstärkungsmedium aufweist.

37. Optische Vorrichtung nach Anspruch 36, dadurch gekennzeichnet, daß das optische Verstärkermedium ein Halbleiter aufweist.

38. Optische Vorrichtung nach Anspruch 33, dadurch gekennzeichnet, daß der optische Verstärker einen Halbleiter aufweist.

39. Optische Vorrichtung nach Anspruch 1, dadurch gekennzeichnet, daß der Resonator einen linearen Fabry-Perot-Hohlraum aufweist.

40. Optische Vorrichtung nach Anspruch 1, dadurch gekennzeichnet, daß der Resonator einen Fabry-Perot-Schleifenhohlraum aufweist.

41. Optische Vorrichtung nach Anspruch 39 oder 40, dadurch gekennzeichnet, daß die Steuereinrichtung die optische Länge des Resonators verändert.

FIG. 1

FIG. 2

FIG. 3

FIG. 4

FIG. 5

**FIG. 6**

**FIG. 7**

**FIG. 8**

# FIG. 9

# FIG. 10

## FIG. 11

## FIG. 12